(19)

**Europäisches Patentamt**
**European Patent Office**
**Office européen des brevets**

(11) **EP 4 552 487 A1**

(12) **EUROPEAN PATENT APPLICATION**

(43) Date of publication:
**14.05.2025 Bulletin 2025/20**

(21) Application number: **24168683.1**

(22) Date of filing: **05.04.2024**

(51) International Patent Classification (IPC):
**A01K 5/00** (2006.01)    **G01N 21/3563** (2014.01)
**G01N 21/359** (2014.01)

(52) Cooperative Patent Classification (CPC):
**A01K 5/001; G01N 21/3563; G01N 21/359**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.11.2023 EP 23208976**

(71) Applicant: **DINAMICA GENERALE S.p.A**
**46025 Poggio Rusco (IT)**

(72) Inventor: **BARBI, Alberto**
**46025 POGGIO RUSCO (MN) (IT)**

(74) Representative: **Studio Torta S.p.A.**
**Via Viotti, 9**
**10121 Torino (IT)**

(54) **METHOD FOR CONTROLLING THE DISTRIBUTION OF A MIXTURE OF INGREDIENTS FOR FEEDING ANIMALS ALONG A FEEDBOX**

(57)    Method for controlling the distribution of a mixture for feeding animals divided into groups, from a container of a mixer wagon to a trough, wherein the mixture is produced in the container (5), an actual mixture as-is weight ($P_{tqActM}$) in the container (5) is acquired by means of load cells (4), a group length ($L_{(k)}$) of the trough (24) is assigned to each group of animals, a target group as-is weight ($P_{tqTargG(k)}$) of the mixture to be distributed is determined as a function of the actual target mixture as-is weight ($P_{tqActM}$) a target group linear weight ($\rho_{Targ(k)}$) of the mixture to be distributed is determined as a function of the target group as-is weight ($P_{tqTargG(k)}$) and the group length ($L_{(k)}$), during the distribution of the mixture at consecutive time instants, an actual group linear weight ($\rho_{Act(k)}$) of the distributed mixture is determined as a function of weight values acquired by means of the load cells (4) and speed values acquired by means of a speed sensor (21), and the distribution of the mixture is adjusted based on a comparison between the target group linear weight ($\rho_{Targ(k)}$) and the actual group linear weight ($\rho_{Act(k)}$).

FIG.4

## Description

Cross reference to related patent Applications

This patent application claims priority of European patent application no. 23208976.3 filed on 10 November 2023, the content of which is incorporated herein by reference.

Technical field

The present invention relates to a method for controlling the distribution of a mixture of animal feed ingredients from a container of a mixer wagon to a trough.

In particular, the present invention finds advantageous, but not exclusive, application in the optimal management of a recipe of ingredients for feeding ruminant livestock, to which the following description will make explicit reference without losing generality.

Background

The feed commonly used for ruminant animals on most modern farms is represented by a single mixture distributed in a trough. This feed is obtained by mixing together different ingredients such as hay, silage, grains, water, supplements, and is referred to in technical jargon as TMR (Total Mixed Ration), or Unifeed.

The animals are typically divided into homogeneous groups according to their nutritional needs and a nutritionist defines, for each group of animals, an optimal recipe of ingredients to meet the needs of the animals in that group of animals. Furthermore, a group of animals can be divided into several physically distinct pens.

The recipe defines the order wherein the ingredients are loaded, the quantity of each ingredient per head of livestock and the resulting total weight of the ration per group of animals, which is obtained as the sum of the contributions of the different ingredients, and the contribution of each ingredient is obtained by multiplying the weight of the ingredient by the number of animals in the group. The number of animals in a group of animals is obtained as the sum of the animals belonging to the group and present in the different pens. Consequently, different groups of animals are fed with different recipes in terms of type and quantity of ingredients. Therefore, in addition to the recipe of ingredients, there is a distribution programme of the mixture, which comprises a sequence of pens wherein to distribute the mixture and, for each pen, the number of animals, the theoretical as-is weight of mixture to be distributed and the length of the trough available to the animals.

The mixture, or TMR, is created by loading one ingredient at a time inside a tank of a mixer wagon and adjusting the quantity by weight of each ingredient which is loaded, as a function of the weight measured by load cells applied to the tank and as a function of chemical and physical parameters of the ingredient which is loaded, such physical and chemical parameters being determined based on measurements of the electromagnetic spectrum reflected and/or absorbed by the mixture performed with an optoelectronic instrument, e.g., a Near InfraRed (NIR) analyser. In order for the measurements made with the optoelectronic instrument to be reliable, the mixture of ingredients already in the tank must reach a sufficient degree of homogeneity.

A sufficient degree of homogeneity must also be achieved at the end of the mixing process before distributing the mixture in the trough. In fact, if the mixture has a poor homogeneity, the animal would easily go to select those ingredients which are most palatable, thus negating one of the most important advantages of TMR, namely providing a balanced ration capable of preventing metabolic imbalances in the animal.

Systems are known for determining the homogeneity of the mixture in the tank of a mixer wagon by exploiting measurements of an NIR analyser.

However, the known art for adjusting the quantity of ingredients to be loaded do not take into account the quantity of water actually contained by the ingredients, and this results in the TMR actually distributed in the trough often not matching what has been established by the different recipes. Furthermore, the TMR distributed in various points of the trough for the same group of animals may not correspond to the quantities established by the relative distribution programme.

Summary

The aim of the present invention is to provide a method for controlling the distribution of the mixture along the trough for different groups of animals, which method is free of the drawbacks described above and, at the same time, is easy and inexpensive to implement.

In accordance with the present invention, a method for controlling the distribution of a mixture of animal feed ingredients from a container of a mixer wagon to a trough and an apparatus for controlling the distribution of a mixture of animal feed ingredients in a trough are provided according to the appended claims.

The claims describe preferred embodiments of the present invention, to be considered an integral part of the present description.

Brief description of the drawings

The present invention will now be described with reference to the attached drawings, which illustrate show a non-limiting embodiment thereof, wherein:

- figures 1 and 2 illustrate a mixer wagon according to respective perspective views from opposite sides;
- figure 3 illustrates the mixer wagon according to the perspective view of figure 1 and configured to implement the method of the present invention; and
- figure 4 illustrates the mixer wagon of figure 3 while it is towed by a tractor.

Description of embodiments

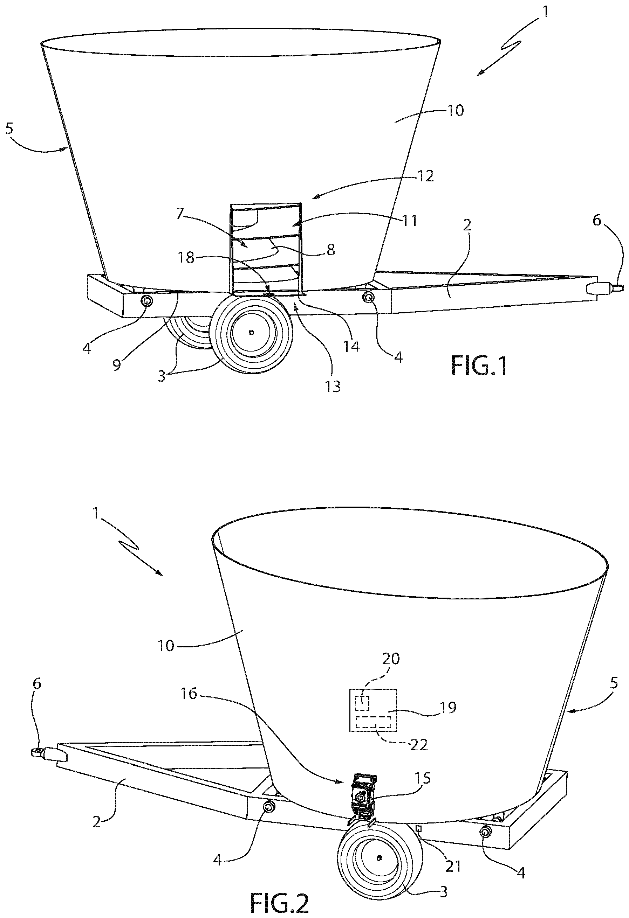

In figures 1 to 3, a mixer wagon for mixing the ingredients of a recipe for feeding animals, and in particular ruminant livestock, is indicated overall with 1. The recipe ingredients comprise, for example, hay, silage, grains, water, supplements.

The mixer wagon 1 comprises a frame 2 provided with wheels 3, gravimetric sensors comprising a plurality of load cells 4, and in particular four load cells 4 mounted at the corners of a rectangular portion of the frame 2, and a container, and in particular a tank 5, which is mounted on the load cells 4 to weigh the contents of the tank 5. In the example shown, the mixer wagon 1 is of the towed type and therefore the frame 2 is provided with a towing eye 6.

The mixer wagon 1 comprises a motorised mixing system 7, which is applied to the tank 5 for mixing the ingredients in the tank 5. The mixing system 7 comprises, for example, an auger 8 (figure 1) with a vertical axis, designed to rotate inside the tank 5, and a motor (not illustrated) for rotating the auger 8.

The tank 5 is open above to be able to receive the ingredients. In particular, the tank 5 has a bottom 9, on the inner side of which the auger 8 is mounted, and a side wall 10, which surrounds the bottom 9. The tank 5 has an outlet opening 11, obtained in a portion 12 of the side wall 10 adjacent to the bottom 9 to let out the mixture, i.e., the TMR, at the end of a mixing process.

Hereinafter, mixing process is intended as the entire process which comprises loading the ingredients one at a time into the tank 5, based on an order established by the recipe, and mixing the ingredients as they are loaded into the tank 5 until reaching the mixture ready for distribution.

The mixer wagon 1 comprises an outlet device 13 for the exit of the mixture from the tank 5 during a distribution process of the mixture into a trough (not illustrated) following the mixing process. The outlet device 13 comprises an exit ramp 14 which projects outside the tank 5 from a lower side of the outlet opening 11. Preferably, the outlet device 13 comprises a hatch (not illustrated) for closing the outlet opening 11 so as to retain the ingredients in the tank 5 during the mixing process.

According to an alternative embodiment not illustrated, the unloading outlet comprises a conveyor belt, which has an inlet end communicating with the outlet opening 11 to withdraw the mixture exiting from the tank 5, and the outlet ramp is connected to the exit end of the conveyor belt.

With reference to a mode of use illustrated by figure 2, the mixer wagon 1 comprises an electromagnetic spectrum analyser 15, which is mounted on the tank 5 with a reading window thereof (not visible in figure 2) facing towards the inside of the tank 5 to acquire reflectance spectra of the mixture in the tank 5 during the mixing process.

The electromagnetic spectrum analyser 15 is an optoelectronic instrument of known type designed to provide reflectance spectra of electromagnetic radiation in a range of the electromagnetic spectrum comprising visible light and/or infrared radiation. Preferably, the electromagnetic spectrum analyser 15 operates in what is known as the near-infrared (NIR) range of electromagnetic radiation and is therefore also commonly called NIR analyser.

The electromagnetic spectrum analyser 15 comprises an electromagnetic radiation source to 'illuminate' the mixture and an electromagnetic radiation sensor to acquire the electromagnetic radiation reflected by the mixture. The reflectance spectrum provided by the electromagnetic spectrum analyser 15 in practice comprises a plurality of reflectance values acquired for a corresponding plurality of wavelength values in the electromagnetic spectrum range wherein the electromagnetic spectrum analyser 15 operates.

The electromagnetic spectrum analyser 15 further comprises a processing unit thereof to process the reflectance spectra in order to obtain other quantities related to the mixture.

Always with reference to figure 2, the electromagnetic spectrum analyser 15 is mounted on the tank 5 so that its reading window is placed in a portion 16 of the side wall 10 of the tank 5, near the bottom 9 and substantially opposite the portion 12 wherein the outlet opening 11 is obtained. In other words, the reading window of the electromagnetic spectrum analyser 15 is placed in front of a portion of the internal volume of the tank 5 wherein there is reasonably always a good quantity of mixture kept moving by the auger 8. In particular, the reading window is a few tens of centimetres away from the bottom 9 so that it is in front of a portion of the internal volume of the tank 5 wherein there is a high flow of mixture.

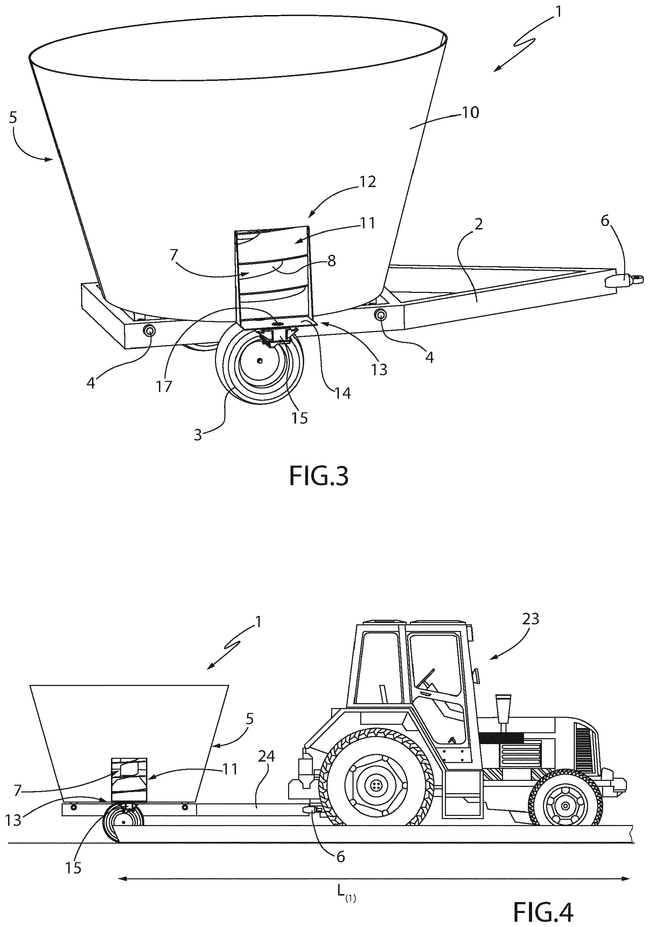

With reference to the mode of use illustrated by figure 3, the electromagnetic spectrum analyser 15 is mounted at the outlet device 13, and in particular below the outlet ramp 14 with the reading window 17 thereof facing the flow of mixture passing through the outlet ramp 14 to acquire reflectance spectra of the mixture during the mixture distribution process. In particular, the outlet ramp 14 has a through opening 18 (figure 1) and the electromagnetic spectrum analyser 15 has the reading window 17 coupled with the opening 18 and facing upwards.

With reference to figure 2, the mixer wagon 1 further comprises: a processing and control unit 19, which is integral with, for example, the frame 2 or with the tank 5, and comprises a memory 20 for storing parameters and reference data; and a speed sensor 21, which is mounted at one of the wheels 3 or the axle of the wheels 3 in a known manner to acquire travel speed values of the mixer wagon 1. The processing and control unit 19 is designed to receive data from the electromagnetic spectrum analyser 15, weight values from the load cells 4 and speed values from the speed sensor 21, and is optionally designed to control the mixing system 7.

Advantageously, the processing and control unit 19 comprises a human-machine interface 22, typically comprising a keyboard and display or a touch-screen display, for receiving commands from an operator and displaying indications which allow to guide the operator during the distribution of the mixture.

Figure 4 illustrates the mixer wagon 1 coupled, by means of the towing eye 6, to a towing vehicle, for example a tractor 23, to allow the mixer wagon 1 to travel at the side and along a trough 24, thus enabling the distribution of the mixture along the trough 24 during the distribution process.

The animals to be fed are divided into groups of homogeneous animals based on their nutritional needs. Different groups of animals may, however, share the same recipe of ingredients and for some of these groups the feed is supplemented with other recipes. The animals of different groups may be in different pens, or the animals of a single group may be in different pens, based on the farm infrastructure. In the following description, for the sake of simplicity, it is assumed, without losing generality, that each group of animals is contained in a respective pen. The generic group of animals will hereinafter also be referred to as the k-th group of animals.

The mixing process performed by the mixer wagon 1 to produce the mixture to be distributed in the trough 24 is based on an ingredient recipe and on a distribution programme which are stored in the memory 20 of the processing and control unit 19. Such a recipe of ingredients is in common for all the groups of animals to be fed with the mixture and comprises, for each ingredient, hereinafter also indicated as i-th ingredient, an ingredient theoretical as-is weight $P_{tqTeo(i)}$.

The processing and control unit 19 and the processing unit of the electromagnetic spectrum analyser 15 are configured to implement the method for controlling the distribution of the mixture from the tank 5 to a trough 24 described hereinafter.

Firstly, the distribution programme envisages that each group of animals is assigned a respective group length $L_{(k)}$, which consists of a length of a section of the trough 24. By way of example, figure 4 illustrates the group length $L_{(1)}$ of the first group of animals. Furthermore, each group of animals is assigned a respective theoretical as-is group weight $P_{tqTeoG(k)}$ of the mixture to be uniformly distributed in the trough 24 by the group length $L_{(k)}$.

The mixture distribution process actually begins with a preparatory step wherein certain parameters are calculated and used for later processing during the actual distribution of the mixture.

The processing and control unit 19 acquires, by means of the load cells 4, an actual as-is mixing weight $P_{tqActM}$ of the mixture present in the tank 5 at the end of the mixing process.

Then, for each group of animals, the processing and control unit 19 determines a target group as-is weight $P_{tqTargG(k)}$ of the mixture to be distributed in the trough 24, as a function of the actual as-is mixture weight $P_{tqActM}$, and a target group linear weight $\rho_{Targ(k)}$ of the mixture to be distributed in the trough 24, as a function of the target group as-is weight $P_{tqTargG(k)}$ and the group length $L_{(k)}$ reserved for the group of animals. The target group linear weight $\rho_{Targ(k)}$ represents the target weight per unit length of mixture to be unloaded from the tank 5, and thus to be distributed in the trough 24.

In particular, the target group as-is weight $P_{tqTargG(k)}$ is determined as a function of the actual mixture as-is weight $P_{tqActM}$, the theoretical group as-is weight $P_{tqTeoG(k)}$ and the theoretical ingredient as-is weight $P_{tqTeo(i)}$ of all the ingredients.

In more detail, the target group as-is weight $P_{tqTargG(k)}$ is determined as follows.

A theoretical mixture as-is weight ($P_{tqTeoM}$) of the mix present in the tank 5 at the end of the mixing process is calculated as the sum of the theoretical ingredient as-is weights ($P_{tqTeo(i)}$) of all the ingredients, i.e., by means of the following formula:

$$P_{tqTeoM} = \sum_{i=1}^{N} P_{tqTeo(i)},$$

wherein N is the number of ingredients in the recipe.

An operator error factor *Err* is determined as a function of the actual mixture as-is weight $P_{tqActM}$ and the theoretical mixture as-is weight $P_{tqTeoM}$ and the target group as-is weight $P_{tqTargG(k)}$ is determined as a function of the operator error factor *Err* and the theoretical group as-is weight $P_{tqTeoG(k)}$.

In even more detail, the operator error factor *Err* is calculated with the following formula:

$$Err = \frac{P_{tqActM} - P_{tqTeoM}}{P_{tqTeoM}}.$$

Lastly, the target group as-is weight $P_{tqTargG(k)}$ is calculated with the following formula:

$$P_{tqTargG(k)} = P_{tqTeoG(k)} \cdot (1 + Err).$$

As far as the target group linear weight $\rho_{Targ(k)}$ is concerned, it is calculated as the ratio between the target group as-is weight $P_{tqTargG(k)}$ and the group length $L_{(k)}$, i.e., by means of the following formula:

$$\rho_{Targ(k)} = \frac{P_{tqTargG(k)}}{L_{(k)}}.$$

At this point, having completed the preparatory step, the processing and control unit 19 controls the distribution of the mixture by opening the hatch of the outlet device 13. According to two possible alternative modes, the mixing system 7 is already activated by the mixing process, or if it had been temporarily deactivated, the processing and control unit 19 commands the activation of the mixing system 7 substantially when the hatch of the outlet device 13 is opened. The rotation of the auger 8 pushes the mixture out of the outlet opening 11.

During the distribution of the mixture, at consecutive time instants according to predetermined acquisition period T, the processing and control unit 19 acquires weight values by means of the load cells 4 and speed values by means of a speed sensor 21 and determines an actual linear group weight $\rho_{Act(k)}$ of the mixture distributed in the trough 24 as a function of the acquired weight values and speed values. The actual linear group weight $\rho_{Act(k)}$ represents the actual weight per mixture unit length which is unloaded from the tank 5, and then distributed into the trough 24.

In particular, the actual linear group weight $\rho_{Act(k)}$ is calculated as the ratio of a difference between two weight values acquired in the last two time instants and a space travelled by the mixer wagon 1 between the last two time instants. The travelled space is calculated as a function of the acquired speed values and the acquisition period T.

Specifically, the space travelled is calculated as the product of an average speed Vm of the mixer wagon 1, which is calculated as a function of some of the speed values acquired and evaluated at the last time instant (current time instant), and the acquisition period T. For example, the average speed $Vm$ is calculated as the average of the speed values acquired within a moving time window ending with the current time instant. In summary, the actual linear group weight $\rho_{Act(k)}$ at the generic (j-th) time instant is calculated by means of the following formula:

$$\rho_{Act(k)} = \frac{P_{(j-1)} - P_{(j)}}{Vm_{(j)} \cdot T},$$

wherein $P_{(j)}$ and $P_{(j-1)}$ are the weight values acquired at the current time instant (j-th time instant) and, respectively, at the immediately preceding time instant, and $Vm_{(j)}$ is the average speed evaluated at the current time instant.

The processing and control unit 19 generates, based on a comparison between the target linear group weight $\rho_{Targ(k)}$ and the actual linear group weight $\rho_{Act(k)}$, a control signal adapted to adjust the distribution of the mixture in the trough 24. According to two alternative modes, the control signal is used either to adjust the travel speed of the mixer wagon 1 or to adjust the flow rate of mixture delivery from the outlet device 3. In the example shown by the figures, the flow rate adjustment is implemented with an adjustment of the rotation speed of the auger 8 of the mixing system 7 or with an adjustment of the opening width of the hatch of the outlet device 13.

In particular, if the actual linear group weight $\rho_{Act(k)}$ is greater than the target linear group weight $\rho_{Targ(k)}$, then the control signal comprises a request for an increase in travel speed of the mixer wagon 1 or a request for a decrease in the delivery flow rate from the outlet device 13; otherwise, if the actual linear group weight $\rho_{Act(k)}$ is less than the target linear group weight $\rho_{Targ(k)}$, then the control signal comprises a request for a decrease in travel speed of the mixer wagon 1 or a request for an increase in the delivery flow rate from the outlet device 13; otherwise, the control signal does not request any increase or decrease in speed or flow rate.

By way of example, the decrease or increase in travel speed of the mixer wagon 1 occurs with a preset speed deviation. Similarly, the decrease or increase in delivery flow rate occurs according to a pre-set flow rate deviation.

According to a first embodiment, the control signal generates a corresponding audible or visual message on the human-machine interface 22, so that the operator can personally act on the tractor controls 23 to increase or decrease the travel speed or on the controls of the mixer wagon 1 to reduce or increase the rotation speed of the mixing system 7 or to modulate the opening of the hatch of the outlet device 13, according to the control mode chosen. Obviously, if the mixing system 7 is operated directly by the power take-off of the tractor 23, the operator will have to act on the controls of the tractor 23 to vary the aforesaid rotation speed.

According to a second embodiment, the control signal acts directly on a motor control unit of the tractor 23 to increase or decrease the travel speed of the tractor 23 or on the processing and control unit 19 to reduce or increase the rotation speed of the mixing system 7 or to modulate the opening of the hatch of the outlet device 13. Obviously, if the mixing system 7 is operated directly by the power take-off of the tractor 23, the control signal acts directly on the motor control unit of the tractor 23 to vary the aforesaid rotation speed. As described above, for the distribution process, the electromagnetic spectrum analyser 15 is mounted at the outlet device 13 to acquire reflectance spectra of the mixture during the distribution of the mixture. The reflectance spectra are acquired sequentially, in respective and consecutive time instants according to said acquisition period T.

The processing unit of the electromagnetic spectrum analyser 15 processes the reflectance spectra to obtain respective absorbance spectra of the mixture. The processing and control unit 19 receives the sequence of absorbance spectra and processes them further to evaluate the homogeneity of the mixture.

In particular, the processing and control unit 19 is configured to determine spectrum variations between pairs of consecutive absorbance spectra or between pairs of consecutive mean absorbance spectra, each mean absorbance spectrum being calculated as the average of a plurality of consecutive absorbance spectra within a moving time window ending with the current time instant. The homogeneity of the mixture is evaluated based on the spectrum variations.

In more detail, for each spectrum variation, a respective weighted variation is determined as a function of an elapsed time $Tpass_j$ from the start of the mixing process to the current time instant or, respectively, an actual mixing process duration $Tmix_{Act}$, and as a function of a target mixing process duration $Tmix_{Targ}$. The homogeneity of the mixture is, therefore, evaluated based on the weighted variations. In other words, the weighted variations are considered an index of the homogeneity of the mixture.

The distribution process is stopped when a certain desired degree of homogeneity is lost. At this point, the hatch of the outlet device 13 is closed, the electromagnetic spectrum analyser 15 is reassembled on the tank 5 (figure 2) and the mixing process in the tank 5 is reactivated to achieve the desired degree of homogeneity again.

According to a further embodiment not illustrated, the mixer wagon 1 comprises, instead of the tank 5, an oblong tank and, instead of the vertical-axis auger 8, at least one horizontal-axis auger arranged longitudinally in the oblong tank, i.e., parallel to the longitudinal axis of the mixer wagon 1.

According to a further embodiment not illustrated, the mixer wagon 1 is self-propelled, i.e., the wheels 3 are motorised, and therefore the tractor 23 is not needed to advance the mixer wagon at the side of and along the trough 24.

According to a further embodiment not illustrated, the processing and control unit 19 is not integral with the mixer wagon 1, e.g., it is mounted on the tractor 23, and is remotely and communicatively connected with the electromagnetic spectrum analyser 15 and the load cells 4 through wireless radio communication means of known type, for example comprising a gateway provided with a 4G/5G modem, or a WiFi router, or a pair of Bluetooth devices, depending on the distance to be covered and the radio propagation environment wherein it must operate. Therefore, the mixer wagon 1, the electromagnetic spectrum analyser 15 and the processing and control unit 19 form an apparatus for mixing the ingredients of an animal feed recipe.

According to a further embodiment not illustrated, the speed sensor 21 is mounted at one of the wheels or the axle of the towing vehicle, i.e., the tractor 23, to acquire travel speed values of the towing vehicle, which obviously travels at the same speed as the towed mixer wagon 1, and is remotely and communicatively connected with the processing and control unit 19 through wireless radio communication means of known type, for example comprising a gateway provided with a 4G/5G modem.

According to further embodiments not illustrated, instead of the speed sensor 21, the mixer wagon 1 or the tractor 23 comprises a geolocation device, e.g., a GPS receiver, communicatively connected with the processing and control unit 19 or integrated in the processing and control unit 19 to acquire speed values in a known manner.

According to a further embodiment not illustrated, a memory implemented in a cloud server is used to store data acquired from the electromagnetic spectrum analyser 15 and from the load cells 4 and/or data obtained from the processing described above.

The main advantage of the method and mixer wagon 1 described above is to provide each animal of any animal group with a mixture ration which is constant both nutritionally and quantitatively, so as to comply with what is established by the recipe and the distribution programme, thanks to the real-time correction of the travel speed of the mixer wagon 1 or the mixture delivery flow rate from the outlet device 3 as a function of the weight values acquired and the recipe parameters. In particular, the method allows to distribute the mixture uniformly along each section of length of the trough 24 $L_{(k)}$, i.e., any two areas of a generic section of trough 24 measuring the same length, in the travel direction of the mixer wagon 1, will substantially receive the same quantities of mixture in terms of as-is weight.

## Claims

1. Method for controlling the distribution of a mixture of animal feed ingredients from a container of a mixer wagon to a trough, the animals being divided into groups of animals, the ingredients being part of a recipe and the mixture being produced in the container (5) following a mixing process of the ingredients based on the recipe, the method comprising:

   - acquire an actual as-is weight ($P_{tqActM}$) of the mixture present in the container (5) at the end of the mixing process by means of gravimetric sensors (4) applied to the container (5) ;

   and for each group of animals, comprising:

   - assigning the group of animals a respective group length ($L_{(k)}$), which consists of a length of a section of the trough (24);
   - determining a target group as-is weight ($P_{tqTargG(k)}$) of the mixture to be distributed in the trough (24), as a function of the actual mixture as-is weight ($P_{tqActM}$);
   - determining a linear target group weight ($\rho_{Targ(k)}$) of the mixture to be distributed in the trough (24), as a function of the target group as-is weight ($P_{tqTargG(k)}$) and the group length ($L_{(k)}$);
   - determining, at consecutive time instants according to a predetermined period (T) during the distribution of the mixture, an actual linear group weight ($\rho_{Act(k)}$) of the mixture distributed in the trough (24) as a function of weight values acquired by means of gravimetric sensors (4) and speed values acquired by speed acquisition means (21) mounted on the mixer wagon (1) or on a towing vehicle (23); and
- adjusting the distribution of the mixture in the trough (24) based on a comparison of the target group linear weight ($\rho_{Targ(k)}$) and the actual group linear weight ($\rho_{Act(k)}$).

2. Method according to claim 1, wherein the recipe comprises, for each ingredient, a theoretical ingredient as-is weight ($P_{tqTeo(i)}$); the method comprising, for each group of animals:

    - assigning a respective theoretical as-is group weight ($P_{tqTeoG(k)}$) of the mixture to be distributed in the trough (24) to the group of animals;

    said target group as-is weight ($P_{tqTargG(k)}$) being determined as a function of the actual mixture as-is weight ($P_{tqActM}$), the theoretical group as-is weight ($P_{tqTeoG(k)}$) and the theoretical ingredient as-is weight ($P_{tqTeo(i)}$) of all the ingredients.

3. Method according to claim 2, wherein determining a target group as-is weight ($P_{tqTarg(k)}$) of the mixture to be distributed in the trough (24) comprising:

    - calculating a theoretical mixture as-is weight ($P_{tqTeoM}$) of the mixture present in the container (5) at the end of the mixing process as the sum of the theoretical ingredient as-is weights ($P_{tqTeo(i)}$) of all the ingredients;
    - determining an error factor (Err) as a function of the actual mixture as-is weight ($P_{tqActM}$) and the theoretical mixture as-is weight ($P_{tqTeoM}$);
    - determining the target group as-is weight ($P_{tqTargG(k)}$) as a function of the error factor (Err) and the theoretical group as-is weight ($P_{tqTeoG(k)}$).

4. Method according to claim 3, wherein said error factor (Err) is calculated with the following formula:

$$Err = \frac{P_{tqActM} - P_{tqTeoM}}{P_{tqTeoM}},$$

    wherein $P_{tqActM}$ is the actual mixture as-is weight and $P_{tqTeoM}$ is the theoretical mixture as-is weight.

5. Method according to claim 3 and 4, wherein said target group as-is weight ($P_{tqTargG(k)}$) is calculated with the following formula:

$$P_{tqTargG(k)} = P_{tqTeoG(k)} \cdot (1 + Err),$$

wherein $P_{tqTeoG(k)}$ is the theoretical group as-is weight and Err is the error factor.

6. Method according to any one of claims 1 to 5, wherein said target group linear weight ($\rho_{Targ(k)}$) is calculated as the ratio of the target group as-is weight ($P_{tqTargG(k)}$) to the group length ($L_{(k)}$).

7. Method according to any one of claims 1 to 5, wherein said actual linear group weight ($\rho_{Act(k)}$) is calculated as the ratio of a difference between two weight values acquired in the last two time instants and a space travelled by the mixer wagon between the last two time instants, said space travelled being calculated as a function of the speed values acquired.

8. Method according to any one of claims 1 to 7, wherein the mixer wagon (1) comprises an outlet device (13) for unloading the mixture from the container (5) and wherein adjusting the distribution of the mixture in the trough (24) comprises:

    - adjusting the travel speed of the mixer wagon (1); or
    - adjusting the mixture delivery flow rate from an outlet device (13) of the mixer wagon (1).

9. Method according to claim 8, wherein adjusting the travel speed of the mixer wagon (1) comprises:

    - if said actual group linear weight ($\rho_{Act(k)}$) is greater than the target group linear weight ($\rho_{Targ(k)}$), then increasing the travel speed;
    - if said actual group linear weight ($\rho_{Act(k)}$) is less than the target group linear weight ($\rho_{Targ(k)}$), then decreasing the travel speed;

    or, adjusting the mixture delivery flow rate from an outlet device (13) comprises:

    - if said actual group linear weight ($\rho_{Act(k)}$) is greater than the target group linear weight ($\rho_{Targ(k)}$), then decreasing the delivery flow rate;
    - if said actual group linear weight ($\rho_{Act(k)}$) is less than the target group linear weight ($\rho_{Targ(k)}$), then increasing the delivery flow rate.

10. Method according to any one of claims 1 to 9, wherein the mixer wagon (1) comprises an outlet device (13) for unloading the mixture from the container (5) to the trough (24), the method comprising:

    - acquiring, by means of an electromagnetic spectrum analyser (15) with a reading window (17) thereof facing towards the flow of mixture crossing the outlet device (13), a sequence of reflectance spectra of the mixture at respective and consecutive time instants during the distribution process;

- evaluating the homogeneity of the mixture based on a processing of the reflectance spectra sequence;

- stopping the distribution of the mixture when a certain desired degree of homogeneity is lost.

11. Apparatus for controlling the distribution of a mixture of animal feed ingredients in a trough (24), the apparatus comprising: a mixer wagon (1), which can be towed by a towing vehicle (23) or is self-propelled, comprises a motorised mixing system (7) applied to the container (5) for mixing the ingredients in the container (5), and comprises an outlet device (13) for unloading the mixture from the container (5); speed acquisition means (21) for acquiring travel speed values of the mixer wagon (1); and processing and control means (19), which are configured to implement the method according to any one of claims 1 to 10.

FIG.1

FIG.2

FIG.3

FIG.4

Europäisches
Patentamt

European
Patent Office

Office européen
des brevets

# EUROPEAN SEARCH REPORT

Application Number

EP 24 16 8683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/044138 A1 (NEIER RODNEY R [US] ET AL) 9 February 2023 (2023-02-09) | 1-5,8,9,11 | INV. A01K5/00 G01N21/3563 G01N21/359 |
| Y | * [0006, 0024, 0036, 0093, 0118, 0133-0135, 0139, 0148-0202, 0209-0211, 0218, 0220-0238, 0255, 0265-0267, 0294-0299, 0309, 0312, 0316, 0323, 0338]; claims 1-4, 7, 18, 23-24; figures 2a, 27 * | 10 | |
| X | US 5 424 957 A (KERKHOFF GARY N [US] ET AL) 13 June 1995 (1995-06-13) * page 1, line 25 - line 40; claims 1, 10, 26; figures 1-6 * * page 8, line 50 - line 67 * * page 9, paragraph 1 * | 1,2,6-9,11 | |
| Y | US 2004/146615 A1 (MCDONALD JOHN THOMAS [US] ET AL) 29 July 2004 (2004-07-29) * [0007, 0137, 0164, 0168, 0199-0202, 0223] * | 10 | |

TECHNICAL FIELDS
SEARCHED    (IPC)

A01K
G01N

The present search report has been drawn up for all claims

| Place of search | Date of completion of the search | Examiner |
|---|---|---|
| The Hague | 30 August 2024 | Steinbock, Lorenz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 8683

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | | Publication date | Patent family member(s) | | Publication date |
|---|---|---|---|---|---|
| US 2023044138 | A1 | 09-02-2023 | AU | 2022325755 A1 | 29-02-2024 |
| | | | CA | 3228541 A1 | 16-02-2023 |
| | | | US | 2023044138 A1 | 09-02-2023 |
| | | | WO | 2023018717 A1 | 16-02-2023 |
| US 5424957 | A | 13-06-1995 | NONE | | |
| US 2004146615 | A1 | 29-07-2004 | CA | 2443098 A1 | 24-10-2002 |
| | | | EP | 1381849 A2 | 21-01-2004 |
| | | | JP | 2004530875 A | 07-10-2004 |
| | | | US | 2004146615 A1 | 29-07-2004 |
| | | | WO | 02084262 A2 | 24-10-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23208976